# EUROPEAN PATENT SPECIFICATION

(11) **EP 1 165 461 B1**
(45) Date of publication and mention of the grant of the patent: **13.10.2004**
(21) Application number: 00905170.7
(22) Date of filing: 22.02.2000
(51) Int. Cl.: C04B 40/00, C04B 14/10, C04B 28/02

(54) **CEMENTITIOUS COMPOSITIONS**
ZEMENTZUSAMMENSETZUNGEN
COMPOSITIONS A BASE DE CIMENT

(30) Priority: 22.02.1999 GB 9903938
(43) Date of publication of application: 02.01.2002
(73) Proprietor: Adelan Ltd., Edgbaston, Birmingham B15 2SQ (GB)
(72) Inventor: KENDALL, Kevin, Market Drayton Shropshire TF1 4PY (GB); LOTA, Jasbir Singh, Forest Gate, London E7 9DX (GB); BENSTED, John, Catford London SE6 2QA (GB)
(74) Representative: Atkinson, Peter Birch
(86) International application number: PCT/GB2000/000597
(87) International publication number: WO 2000/050362

(56) References cited:
- EP-A- 0 010 777
- EP-A- 0 263 606
- EP-A- 0 492 146
- EP-A- 0 742 186
- WO-A-90/13524
- WO-A-98/57905
- GB-A- 2 258 231
- US-A- 5 792 251
- US-A- 5 843 216

## Description

The present invention relates to cementitious compositions and methods for producing such compositions.

High strength cement products can be produced by adding plasticisers or superplasticisers (usually organic polymers) to cement mixes, followed by high shear mixing, moulding, pressing or extrusion. The polymers serve to improve the rheology of the wet mix, allowing the particles to pack and flow better at lower water contents, thereby improving the cement microstructure in the cured state.

For example, US-A-4410366 discloses hardenable cementitious compositions having a specified rheology and containing water in a proportion that is not greater than 25 wt% of the composition and at least one water soluble plasticiser in proportion of 1 to 15wt% of the cement.

US-A-4353748 discloses a cement product obtained by mixing from 1-5wt% of plasticiser with cement and water, wherein the volume of pores larger than 15 cubic micrometers does not exceed 0.5% of the volume of the product. This cement has a bend strength of higher than 40 MPa and in some cases higher than 50 MPa.

EP-A-0 038 126 describes a cement composition where sub-micron particles are added to the cement mix in order to reduce the plasticiser level from 5wt% to 3wt% of the cement mix.

A major problem with these cement compositions is the high proportion of plasticiser that is required to achieve the desired rheology effects. Usually 1 wt% of plasticiser is necessary to observe a change in the rheology properties, 3 wt% gives a more significant change and 5 to 7wt% is required to gain maximum property benefits. This high level of plasticiser addition gives several disadvantages which have contributed to a reduction in the development of such materials.

The main disadvantage is the susceptibility of the product incorporating plasticiser to water and environmental attack. Also the problems of excessive shrinkage, expansion, distortion, cracking and chemical attack have been observed under certain conditions.

Secondly as the plasticisers are high cost materials, the cost of their addition becomes prohibitively high when they are mixed into cement in the proportions described above.

Thirdly, often the current products fail to pass many of the fire resistance tests when containing such high levels of organic additives, i.e. the plasticisers. Obviously this implies that their use is restricted.

It is an object of the present invention to obviate or mitigate the abovementioned disadvantages.

According to a first aspect of the present invention there is provided in claim 1 a method of producing a curable cementitious composition comprising admixing: -
a) particles of cement, having a mean particle size in the range of 50 - 300 µm, wherein the cement does not contain more than 5 % by weight of particles having a size below 20 µm and not more than 5 % by weight of particles having a size above 300 µm and
b) an aqueous suspension containing a plasticiser and also particles of a pozzolan having a mean particle size of 0.1 - 10 µm which is at most one half that of the mean particle size of the cement such that the composition comprises from 0.05 to 0.5 wt% plasticiser.

It will be appreciated that the method of the invention may be effected with a single plasticiser or a mixture of plasticisers. Similarly the method of the invention may be effected with a single pozzolan or a mixture of pozzolans.

Particle sizes as referred to herein may be measured with a Malvern Mastersizer model EBER Version 1.2.

We have found, and this forms the basis for the present invention, that curable cement compositions with excellent rheological properties and containing a relatively low amount of plasticiser may be obtained by the use of a cement and a pozzolan, provided that
(i) the pozzolan is initially formulated as a suspension in water also containing a plasticiser, and
(ii) the pozzolan in the suspension has a mean particle size of 0.1 - 10 µm which is at most one half that of the cement to which the suspension will be added.

As discussed more fully below the amount of plasticiser (or mixture of plasticisers) used is 0.05 to 0.5 % by weight of the curable composition. The cured compositions have good resistance to water and environmental attack.

For the subsequent description the aqueous suspension shall be referred to as a milk, although it must be noted that no limitation is intended nor should be implied by the adoption of this term.

It is envisaged but not necessarily essential that the milk will provide all of the water required for the curable composition.

The milk may have the following composition.

| | |
|---|---|
| Pozzolan | 5-60wt% |
| Plasticiser | 0.1-5wt% |
| Water | 35-95wt% |

The milk may be produced by mixing together at least one pozzolan, at least one plasticiser and water using a high speed mixer. Examples of a high speed mixer include a blade mixer, a ball mill or a bead mill. The required particle size for the pozzolan may be obtained during production of the milk, e.g. by using a bead mill.

The milk may be stable enough to be stored/transported from its place of manufacture to the location at which it is to be used. However, if the milk is to be stored and/or transported then it preferably also incorporates a thickener (e.g. a polymeric thickener) to inhibit settlement of the pozzolan. The thickener may also improve the rheological properties of the cement composition. The amount of thickener may be in the range of 0.0002-1.0wt%. Examples of thickeners include natural gums such as alginates, guar gum, cellulose, cellulose ethers such as methylhydroxyethyl and hydroxypropyl or synthetic polymers such as polyethylene oxides, acrylic co-polymers, polyvinyl alcohol or latex polymers.

The mean particle size of the pozzolan is at most one fifth, more preferably one tenth, even more preferably at most one twentieth, and most preferably at most one thirtieth of that of the cement. The mean particle size of the pozzolan material is in the range of 0.1 - 10 µm.

A pozzolan (otherwise known as a pozzolana) is a material, which, though not cementitious by itself, will effectively react with lime, or sources of lime like Portland cement, to produce a cementitious product. Slags, especially granulated slags are often, for reasons of custom and practice, classified differently from pozzolans. Such a difference is more apparent than real. Pozzolans need an alkaline environment (effectively calcium hydroxide) to become cementitious and thus to contribute to long term strength and lower permeability. Slags are regarded as latently hydraulic (cementitious), but form surface films at the beginning of hydration that require an alkaline environment (such as lime or Portland cement) to break them down. In other words, slags and pozzolans are very similar - the differences are very fine. Accordingly, slags can best be regarded as forms of pozzolans, since any differences are at best secondary and in no way primary. The behaviour of slags in cement and pozzolans is very similar, so much so that slags can in reality be regarded as pozzolans. Pozzolans for use in the invention are selected to give a lubricious interaction with the cement and other particles in the composition to be cured. It is particularly preferred that the pozzolan is a plate-like material, having a preferred thickness of around 100nm and a diameter of around 5 microns. Preferred examples of pozzolan for use in the invention include calcined clay, silica, silica fume, aluminosilicates, slags, granulated slags, fuel ashes, rice husk ash, calcined paper waste and calcined china clay. The latter material is known as metakaolin and is available from the English China Clay company.

It is preferred that the pozzolan constitutes from 5-30% of the total weight of the cement and pozzolan in the composition. More preferably the pozzolan constitutes from 5-20% and even more preferably 5-10% on the same basis.

Conventional curable cement compositions are generally produced with particulate cement having a mean particle sizes of approximately 15 µm. Such particulate cement may be employed for the present invention (indeed it is possible to employ cement having a lower mean particle size, e.g. at least 5µm and at least 10µm) but we have found that good rheological properties may be obtained by the use of a higher mean particle size for the cement. In accordance with the invention that the mean particle size of the cement is in the range of 50-300 µm. The cement does not contain more than 5% by weight of particles below 20µm and more than 5% by weight of particles above 300 µm. The desired particle size range for the cement may of course be obtained by sieving.

For a cement having a particle size in the range 50-300µm the pozzolan has a mean particle size in the range 0.1-10µm, with not more than 5% of particles below 0.1µm and not more than 5% of particles above 10µm.

The cement may be any cement, as recognised by those skilled in the art, used in the building/maintenance/protection of structures. Preferred examples of such may be chosen from the group which includes calcium silicate, calcium aluminate (high aluminate) cements or blended cements. Thus, for example, the cement may be a Portland Cement. Alternatively the cement may be calcium sulphate based, calcium aluminate cement, glass based, oxide based, dental/medical cement or mixtures of these cements.

The term cement is also intended to encompass clinker, a solid material, usually a ceramic that is totally or partially fused by heat treatment, which is recognised to include calcium silicates. The clinker may be ground after heat treatment. Modifying agents may be incorporated into the clinker, the agents may function as grinding aids. Examples include iron, silicon or aluminium oxides, calcium sulphate, carbonate or stearate, or stearic acid.

A further component of the curable composition (incorporated in the milk) is a plasticiser which will generally be an organic polymer. It is particularly preferred to use a superplasticiser. The invention allows the use of 0.05 to 0.5 wt% of plasticiser / superplasticiser (this level of plasticiser is particularly useful for extrusion applications). Examples of a plasticiser / superplasticiser include polyacrylic acid, poly-carboxylates or salts, co-polymers or derivatives thereof. The derivatives may include polyacrylamides or other precursors, sulphonated naphthalene resins, lignosulphonates, "comb"-type plasticisers, cellulose based, polyvinyl alcohol based polymers, sulphonated melamine-formaldehyde condensates, sulphonated naphthalene-formaldehyde condensates or modified lignosulphonates.

Optionally the plasticiser may include a charged moiety. Examples of a charged moiety include carboxylate, sulphonate, oxide or ammonium groups.

Most preferably the plasticiser employed in the invention is a superplasticiser in the form of a "comb-type" polymer. Such polymers may comprise a backbone having charged and/or uncharged moieties (e.g. carboxylate, sulphonate, ester, amide or hydroxyl) and polyalkylene oxide (e.g. polyethylene oxide) side chains.

Preferably the water content of the composition at the mixing stage is less than 20wt%. More preferably the water content is less than 15wt% and even more preferably less than 12%.

A curable cementitious composition produced from the abovementioned components, i.e. cement and milk (pozzolan, plasticiser and water), may have the following composition.

| | |
|---|---|
| Cement | 50-94 wt% |
| Pozzolan | 2-30 wt% |
| Plasticiser | 0.05-0.5 wt% |
| Water | less than 20 wt% |
| Thickener | 0-1.0wt% |

Preferably the pozzolan (or mixture of pozzolans) is present in the curable cement composition in the range of 5-30wt%.

The composition may include other components as described below.

The curable cementitious composition has the following properties and advantages.
1) High workability.
2) Large or difficult pours can be made with little or no vibration, i.e. self compacting to achieve a dense, very low void free product.
3) The composition can be spread onto a surface by means of a trowel or by spraying or painting.
4) The milk imparts superior capacity to disperse the cement/clinker agglomerates, resulting in minimal water usage and improved control.
5) The cement/clinker exhibits no retardation, gain in strength, low permeability and increased durability.
6) The cement/clinker mixtures remain cohesive, i.e. they show no segregation and can be pumped or sprayed.
7) Excellent surface finish

Modifying agents may be incorporated into the curable cement composition to obtain particular chemical and physical properties. These agents may be incorporated during mixing or may be applied in the plastic or hardened state of the composition. Examples include an accelerating admixture, a retarding admixture, or an air entraining agent, or a polymer, in amounts known in the art.

The accelerating admixture may lower the time of setting and accelerate the rate of strength development. It may be selected from the following group of materials: -
(i) Soluble inorganic salts including chlorides, bromides, fluorides, carbonates, thiocyanates, nitrites, nitrates, thiosulphates, silicates, aluminates, alkali hydroxides, alkaline formate, calcium acetate, calcium propionate or calcium butyrate.
(ii) Soluble organic compounds including triethanolamine.
(iii) Setting admixtures such as those used in Shotcrete and materials that are recognised to promote setting in a few minutes including sodium silicate, sodium aluminate, aluminium chloride, sodium fluoride, strong alkalis or calcium chloride.
(iv) Solid admixtures including calcium aluminate, seeds of finely divided Portland cement, silicate materials, aluminate materials, finely divided magnesium carbonate or calcium carbonate.

Preferably the retarding admixture is selected from the group which includes lignosulphonates, sugars, hydroxy-carboxylic acids, carbonates, phosphates, inorganic salts of borates, or the halide, sulphate or nitrate salts of lead, zinc, copper, arsenic or tin.

It is recognised that air entraining agents capture small air bubbles and thus improve the workability of the composition in the plastic state, reduce bleeding and segregation and hence increase the durability of the composition, particularly with regard to freeze-thawing. Preferably the air entraining agent is selected from the group which includes sodium oleate, sodium lauryl sulphate, and neutralised wood resin.

The polymer may be used to improve the properties of the cement compositions, which have delayed hardening characteristics, low tensile strength, large drying shrinkage, low bonding strength in repair applications or low chemical resistance. The use of a polymer allows the production of anti-corrosion linings. Preferably the polymer is selected from the group which includes latices, cement compatible polymer dispersions, water soluble polymers, or liquid resins.

Optionally the composition may further include modifying agents, e.g. sodium nitrite, potassium chromate, sodium benzoate or stannous chloride.

The composition may further include fillers, e.g. pulverised fuel ash, pigmented materials, blast furnace slag, silica, sand, calcium carbonate, aggregates (natural or man-made) or fibres.

Curable cement compositions in accordance with the invention have a variety of end uses, including: -
1) High specification mortars, grouts and renders.
2) Decorative materials such as paving slabs, tiles, coatings.
3) Acid resistant products, e.g. for use on farms.
4) Sulphate resistant products, i.e. for increased durability in sulphate containing environments.
5) Chloride resistant products, i.e. for increased durability in chloride containing environments.
6) Products which can prevent alkali silica reactions, reduce reinforcing bar corrosion, lower freeze-thaw damage and prevent efflorescence.
7) Special products, where the properties of the cement can be modified by the addition of fibres.
8) Lightweight products for thermal insulation.
9) Pipelinings.
10) Flooring.
11) Tiles.
12) Boards.
13) Extrusion applications, such as sections for construction.
14) Masonry joining.
15) Cement paints.

The invention will be further illustrated by the following, non-limiting Examples.

### Example 1

Particles of Metastar 501 (a metakaolin available from English China Clays International) were mixed with water in proportions of 1.2:1 by weight. 1.25wt% of Advacast (a 40wt% solution of polycarboxylate plasticiser, available from Grace Construction Products Ltd) was added to give a concentration of 0.5% plasticiser in the mixture. In addition approximately 0.04wt% of Kelzan (sodium alginate, available from Aldrich Chemicals) was added to the mixture as a thickening agent.

The mixture was then bead milled for 30 minutes in order to grind the particles down to approximately 0.5-1µm, as measured by a Malvern Mastersizer model EBER Version 1.2. This resulted in the production of a stable milky suspension. 50 grams of the milky suspension were added to 100 grams of a sieved Portland cement clinker which passed a 300µm mesh but which was held on a 150µm mesh and which contained a wide distribution of particle sizes to allow good particle packing. On mixing the composition in a blade mixer, a highly plastic composition was produced which could be squeezed to make thin sheets in a press or which could be cast moulded or extruded to produce tubes, bars and more complex shapes.

This mixture contained 0.26 grams of organic additive in 150 grams of Portland cement powder, i.e. 0.17wt%.

The product was cured in a plastic bag for several days and displayed very good surface quality, high bending strength and low permeability commensurate with its low porosity and uniform fine microstructure. The product was durable in both dry and wet environments, it resisted a blow torch flame and did not smoke excessively in a fire situation.

### Example 2

Metakaolin (Metastar 501 available from English China Clay Industries) and water in the ratio by mass of 1:0.6 were mixed together. 1.75wt% of Glenium 51 (a 40wt% solution of polycarboxylate plasticiser, obtained from Feb Master Builders) was added to give a concentration of 0.7% plasticiser in the mixture. The mixture was mixed in a shear mixer for 1 minute in order to grind the particles down to approximately 0.4µm, as measured by a Malvern Mastersizer model EBER Version 1.2. To this mixture 0.05wt% Kelzan (sodium alginate, obtained from Aldrich Chemicals) was added as a thickening agent and mixing continued for a further 1 minute. This resulted in a stable suspension. To this suspension coarsely ground Portland cement was added (mean particle size of around 22 microns) so that the ratio by mass of the suspension to cement was 1:2.5. Further mixing in a Hobart mixer for five minutes resulted in a very fluid paste, having an overall plasticiser content of 0.2wt%. The paste poured easily into moulds. The hardened material, placed under water for 28 days, exhibited compressive and flexural strengths of 100 and 15Mpa.

### Example 3

Metakaolin (Metastar 501 available from English China Clay Industries) and water in the ratio by mass of 1:1.5 were mixed together. 1.25wt% of Glenium 51 (a 40wt% solution of polycarboxylate plasticiser, obtained from Feb Master Builders) was added to give a concentration of 0.5% plasticiser in the mixture. The mixture was mixed in a shear mixer for 1 minute in order to grind the particles down to approximately 0.4µm, as measured by a Malvern Mastersizer model EBER Version 1.2. To this mixture 0,05wt% Kelzan (sodium alginate, obtained from Aldrich Chemicals) was added as a thickening agent and mixing continued for a further 1 minute. This resulted in a stable suspension. To this suspension coarsely ground Portland cement clinker was added (in the particle size range 75-90 microns) so that the ratio by mass of the suspension to clinker was 1:2. Further mixing in a Hobart mixer for five minutes resulted in a highly workable paste. The paste was poured into a plastic bag and pressed. After 8 hours pressing a strong tile resulted. The tile was strong and dense. This is due to the improved cement microstructure that is formed in the hydrating system.

### Example 4

Metakaolin (Metastar 501 available from English China Clay Industries), ground granulated blast furnace slag (GX5 obtained from Castle Cement Ltd) and water in the ratio by mass of 1:1:3 were mixed together. 2.25wt% of Glenium 51 (a 40wt% solution of polycarboxylate plasticiser, obtained from Feb Master Builders) was added to give a concentration of 0.9% plasticiser in the mixture. The mixture was mixed in a shear mixer for 1 minute in order to grind the particles down to approximately 0.4µm, as measured by a Malvern Mastersizer model EBER Version 1.2. To this mixture 0.04wt% Kelzan (sodium alginate, obtained from Aldrich Chemicals) was added as a thickening agent and mixing continued for a further 1 minute. This resulted in a stable suspension. To this suspension coarsely ground Portland cement was added (mean particle size about 22 microns) so that the ratio by mass of the suspension to cement was 1:2. Further mixing in a Hobart mixer for five minutes resulted in a very fluid paste which poured easily into moulds and was then hardened. The hardened material showed low porosity and permeability and had good surface quality and excellent durability when left exposed to all weather conditions outdoors. The hardened material showed no efflorescence (which would otherwise be caused by leaching of lime and its subsequent carbonation).

### Example 5

Metakaolin (Metastar 501 available from English China Clay Industries), ground granulated blast furnace slag (GX5 obtained from Castle Cement Ltd) and water in the ratio by mass of 1:1:3 were mixed together. 2.38wt% of Glenium 51 (a 40wt% solution of polycarboxylate plasticiser, obtained from Feb Master Builders) was added to give a concentration of 0.95% plasticiser in the mixture. The mixture was mixed in a shear mixer for 1 minute in order to grind the particles down to approximately 0.4µm, as measured by a Malvern Mastersizer model EBER Version 1.2. To this mixture 0.04wt% Kelzan (sodium alginate, obtained from Aldrich Chemicals) was added as a thickening agent and mixing continued for a further 1 minute. This resulted in a stable suspension. To this suspension coarsely ground Portland cement (mean particle size about 22 microns) and Portland clinker (sieved through 1.18mm mesh) were mixed in the ratio of 1:0.4 by mass. This resulted in a cement and clinker mixture. This cement and clinker mixture was mixed with the previously prepared suspension in the ratio of cement and clinker mixture to suspension 2:1. Further mixing in a Hobart mixer for five minutes resulted in a very fluid paste which poured easily into moulds and was then hardened.

A prismatic sample (160mm x 40mm) was subjected to a standard water test in which the hardened sample is placed in water, the water changed daily and the pH of the water measured when changed. The results obtained were compared with those for a similar sized sample made of a standard 1.5:1 sand and cement mortar

The water in the water test of the cement according to Example 5 reached a pH of 9 in 9 days, as compared to a standard 1.5:1 sand and cement mortar which took 35 days to reach the same pH. The shorter time span indicates that a lower amount of alkali (Na⁺/K⁺ ions) had dissolved out of the cement, due to a more tight microstructure, which allows less material to be leached from the cement.

### Example 6

Metakaolin (Metastar 501 available from English China Clay Industries), ground granulated blast furnace slag (GX5 obtained from Castle Cement Ltd), water and yellow iron oxide pigment in the ratio by mass of 1:1:2.75:0.1 were mixed together. 2.48wt% of Glenium 51 (a 40wt% solution of polycarboxylate plasticiser, obtained from Feb Master Builders) was added to give a concentration of 0.99% plasticiser in the mixture. The mixture was mixed in a shear mixer for 1 minute in order to grind the particles down to approximately 0.4µm, as measured by a Malvern Mastersizer model EBER Version 1.2. To this mixture 0.04wt% Kelzan (sodium alginate, obtained from Aldrich Chemicals) was added as a thickening agent and mixing continued for a further 1 minute. This resulted in a stable suspension. To the suspension coarsely ground Portland cement (mean particle size about 22 microns) and Portland clinker (sieved through 0.6mm mesh) were mixed in the ratio of 1:0.4 by mass. This resulted in a cement and clinker mixture. This cement and clinker mixture was mixed with the previously prepared suspension in the ratio of cement and clinker mixture to suspension 2:1. Further mixing in a Hobart mixer for five minutes resulted in a very fluid paste, having an overall plasticiser content of 0.3wt%. The paste poured easily into moulds. The hardened material exhibited comparable properties as in the previous Example.

### Example 7

Metakaolin (Metastar 501 available from English China Clay Industries), and water in the ratio by mass of 1:1.5 were mixed together. 1.25wt% of Glenium 51 (a 40wt% solution of polycarboxylate plasticiser, obtained from Feb Master Builders) was added to give a concentration of 0.5% plasticiser in the mixture. The mixture was mixed in a shear mixer for 1 minute in order to grind the particles down to approximately 0.4µm, as measured by a Malvern Mastersizer model EBER Version 1.2. To this mixture 0.05wt% Kelzan (sodium alginate, obtained from Aldrich Chemicals) was added as a thickening agent and mixing continued for a further 1 minute. This resulted in a stable suspension. To this suspension was added calcium aluminate cement (obtained from Lafarge Aluminates, mean particle size range 75-90 microns) so that the ratio by mass of suspension to cement was 1:2. Further mixing in a Hobart mixer for five minutes resulted in a highly workable paste. The paste was poured into a plastic bag and pressed. After 8 hours pressing a strong, dense tile resulted. Firing to 1150°C resulted in a strong ceramic-like tile being produced, due to the development of ceramic bonding in the system.

### Example 8

Metakaolin (Metastar 501 available from English China Clay Industries) and water were mixed in the proportion 1:1.3 by weight. 3.6wt% of Glenium 51 (a 40wt% solution of polycarboxylate plasticiser, obtained from Feb Master Builders) was added to give a concentration of 1.42% plasticiser in the mixture. In addition approximately 0.04wt% of Kelzan (sodium alginate, obtained from Aldrich Chemicals). The suspension was bead milled for 30 minutes in order to get particles of 0.34µm. The suspension was placed in a Hobart mixer and ordinary Portland cement (from Castle Cement, mean particle size 21.8 microns) was added in the ratio of 0.35:1. This mixture was mixed for 5 minutes to obtain an almost dough like paste, having an overall plasticiser content of 0.35wt%. The paste was placed in an extrusion die (10cm long with 5mm exit hole and 1cm diameter). The paste was extruded by having a loading rate of 1cm/minute (crosshead speed) into a rod of 5mm diameter. This rod was put in a plastic bag and sealed. After 8 hours the extruded paste rod exhibited an excellent surface finish, showed no shrinkage cracking and on breaking the cross section showed no air bubbles.

## Claims

1. A method of producing a curable cementitious composition comprising admixing: -
a) particles of cement having a mean particle size in the range of 50-300µm wherein the cement does not contain more than 5% by weight of particles having a size below 20µm and not more than 5% by weight of particles having a size above 300µm, and
b) an aqueous suspension containing a plasticiser and also particles of a pozzolan having a mean particle size in the range of 0.1 - 10µm,
such that the composition comprises from 0.05 to 0.5wt% plasticiser, and allowing or causing the mixture to cure.

2. A method as claimed in claim 1 wherein the composition contains between 0.05 and 0.15wt% plasticiser.

3. A method as claimed in claim 1 or 2 wherein a polymeric thickening agent is incorporated in the aqueous suspension.

4. A method as claimed in claim 3 wherein the thickening agent is a polymeric thickening agent.

5. A method as claimed in claim 4 wherein the cement has a mean particle size in the range of 75-300µm.

6. A method as claimed in any one of claims 1 to 5 wherein the cement is a calcium silicate, calcium aluminate (high alumina), blended, Portland, calcium sulphate, glass based, oxide based, clinker or mixtures of these cements.

7. A method as claimed in any one of claims 1 to 6 wherein the pozzolan is metakaolin.

8. A method of producing a curable cementitious composition comprising admixing:-
a) particles of cement having a mean particle size in the range of 50-300µm wherein the cement does not contain more that 5% by weight of particles having a size below 20µm and not more than 5% by weight of particles having a size above 300µm, and
b) an aqueous suspension containing a plasticiser and also particles of a pozzolan having a mean particle size in the range of 0.1 - 10µm,
such that the composition comprises from 50 to 94 wt% cement, from 2 to 30wt% pozzolan, from 0.05 to 0.5wt% plasticiser, and allowing or causing the mixture to cure.

9. A method according to claim 8 wherein the composition comprises from 5 to 30% by weight of pozzolan.

10. A method as claimed in claim 9 wherein the composition contains between 0.05 and 0.15wt% by weight of plasticiser.

11. A method as claimed in claim 10 wherein the pozzolan is metakaolin.

12. A method as claimed in any one of claims 1 to 11 wherein the plasticiser is chosen from the group that includes polyacrylic acid, poly-carboxylates and salts, co-polymers and derivatives thereof, wherein the derivatives include polyacrlyamides and other precursors, sulphonated naphthalene resins, lignosulphonates, "comb"-type plasticisers, cellulose based, polyvinyl alcohol based polymers, sulphonated melamine-formaldehyde condensates, sulphonated naphthalene-formaldehyde condensates and modified lignosulphonates.

13. A method as claimed in claim 12 wherein the plasticiser is a "comb"-type plasticiser, comprising a backbone having charged and/or uncharged moieties and polyalkylene side chains.

14. A method as claimed in any one of claims 1 to 13 wherein the plasticiser is a superplasticiser.

15. A curable cementitious composition obtained by the method of any of the preceding claims.

## Patentansprüche

1. Verfahren zum Herstellen einer härtbaren Zementzusammensetzung, umfassend das Zumischen von:
a) Zementpartikeln mit einer mittleren Partikelgröße im Bereich von 50 bis 300 µm, worin der Zement nicht mehr enthält als 5 Gew.% Partikel mit einer Größe unterhalb von 20 µm und nicht mehr als 5 Gew.% Partikel mit einer Größe oberhalb von 300 µm, und
b) einer wässrigen Suspension, die ein Plastifizierungsmittel enthält und außerdem Partikel einer Puzzolanerde mit einer mittleren Partikelgröße im Bereich von 0,1 bis 10 µm,
derart, dass die Zusammensetzung 0,05% bis 0,5 Gew.% Plastifizierungsmittel aufweist und ein Härten der Mischung zulässt oder dieses bewirkt.

2. Verfahren nach Anspruch 1, worin die Zusammensetzung zwischen 0,05% und 0,15 Gew.% Plastifizierungsmittel enthält.

3. Verfahren nach Anspruch 1 oder 2, worin ein polymeres Eindickungsmittel in die wässrige Suspension eingearbeitet wird.

4. Verfahren nach Anspruch 3, worin das Eindickungsmittel ein polymeres Eindickungsmittel ist.

5. Verfahren nach Anspruch 4, worin der Zement eine mittlere Partikelgröße im Bereich von 75 bis 300 µm hat.

6. Verfahren nach einem der Ansprüche 1 bis 5, worin der Zement ein Calciumsilicat, Calciumaluminat (mit hohem Gehalt an Aluminiumoxid), gemischt, Portland, Calciumsulfat, auf Glasbasis, auf Oxidbasis, Klinker oder Mischungen dieser Zemente ist.

7. Verfahren nach einem der Ansprüche 1 bis 6, worin die Puzzolanerde Metakaolin ist.

8. Verfahren zum Herstellen einer härtbaren Zementzusammensetzung, umfassend das Zumischen von:
a) Zementpartikeln mit einer mittleren Partikelgröße im Bereich von 50 bis 300 µm, worin der Zement nicht mehr enthält als 5 Gew.% Partikel mit einer Größe unterhalb von 20 µm und nicht mehr als 5 Gew.% Partikel mit einer Größe oberhalb von 300 µm, und
b) einer wässrigen Suspension, die ein Plastifizierungsmittel enthält und außerdem Partikel einer Puzzolanerde mit einer mittleren Partikelgröße im Bereich von 0,1 bis 10 µm,
derart, dass die Zusammensetzung 50% bis 94 Gew.% Zement, 2% bis 30 Gew.% Puzzolanerde, 0,05% bis 0,5 Gew.% Plastifizierungsmittel aufweist und ein Härten der Mischung zulässt oder dieses bewirkt.

9. Verfahren nach Anspruch 8, bei welchem die Zusammensetzung 5% bis 30 Gew.% Puzzolanerde aufweist.

10. Verfahren nach Anspruch 9, bei welchem die Zusammensetzung zwischen 0,05% und 0,15 Gew.% Plastifizierungsmittel enthält.

11. Verfahren nach Anspruch 10, bei welchem die Puzzolanerde Metakaolin ist.

12. Verfahren nach einem der Ansprüche 1 bis 11, worin das Plastifizierungsmittel ausgewählt ist aus der Gruppe, die einschließt: Polyacrylsäure, Polycarboxylate und Salze, Copolymere und Derivate davon, worin die Derivate einschließen: Polyacrylamide und andere Präkursoren, sulfonierte Naphthalenharze, Lignosulfonate, Plastifizierungsmittel vom "Kamm"-Typ, solche auf Cellulose-Basis, Polyvinylalkoholbasierende Polymere, sulfonierte Melamin-Formaldehyd-Kondensate, sulfonierte Naphthalen-Formaldehyd-Kondensate und modifizierte Lignosulfonate.

13. Verfahren nach Anspruch 12, worin das Plastifizierungsmittel ein Plastifizierungsmittel vom Kamm-Typ ist, aufweisend ein Grundgerüst mit geladenen und/oder ungeladenen Teilen und Polyalkylen-Seitenketten.

14. Verfahren nach einem der Ansprüche 1 bis 13, worin das Plastifizierungsmittel ein Superplastifizierungsmittel ist.

15. Härtbare Zementzusammensetzung, die mit Hilfe des Verfahrens nach einem der vorgenannten Ansprüche erhalten wird.

## Revendications

1. Procédé pour la production d'une composition à base de ciment durcissable consistant à mélanger:
a) des particules de ciment présentant une taille de particules moyenne dans l'intervalle de 50-300 µm, dans lequel le ciment ne contient pas plus de 5% en poids de particules présentant une taille en dessous de 20 µm et pas plus de 5% en poids de particules présentant une taille au-dessus de 300 µm, et
b) une suspension aqueuse contenant un plastifiant et aussi des particules d'une pouzzolane présentant une taille de particules moyenne dans l'intervalle de 0,1-10 µm,
de sorte que la composition comprend de 0,05 à 0,5% en poids de plastifiant, et à laisser ou à faire durcir le mélange.

2. Procédé suivant la revendication 1, dans lequel la composition contient entre 0,05 et 0,15% en poids de plastifiant.

3. Procédé suivant la revendication 1 ou 2, dans lequel un agent épaississant polymère est incorporé dans la suspension aqueuse.

4. Procédé suivant la revendication 3, dans lequel l'agent épaississant est un agent épaississant polymère.

5. Procédé suivant la revendication 4, dans lequel le ciment présente une taille de particules moyenne dans l'intervalle de 75-300 µm.

6. Procédé suivant l'une quelconque des revendications 1 à 5, dans lequel le ciment est un silicate de calcium, un aluminate de calcium (haute teneur en alumine), mélangé, Portland, un sulfate de calcium, à base de verre, à base d'oxyde, un clinker ou des mélanges de ces ciments.

7. Procédé suivant l'une quelconque des revendications 1 à 6, dans lequel la pouzzolane est un métakaolin.

8. Procédé pour la production d'une composition à base de ciment durcissable consistant à mélanger:
a) des particules de ciment présentant une taille de particules moyenne dans l'intervalle de 50-300 µm, dans lequel le ciment ne contient pas plus de 5% en poids de particules présentant une taille en dessous de 20 µm et pas plus de 5% en poids de particules présentant une taille au-dessus de 300 µm, et
b) une suspension aqueuse contenant un plastifiant et aussi des particules d'une pouzzolane présentant une taille de particules moyenne dans l'intervalle de 0,1-10 µm,
de sorte que la composition comprend de 50 à 94% en poids de ciment, de 2 à 30% en poids de pouzzolane, de 0,05 à 0,5% en poids de plastifiant, et à laisser ou à faire durcir le mélange.

9. Procédé suivant la revendication 8, dans lequel la composition comprend de 5 à 30% en poids de pouzzolane.

10. Procédé suivant la revendication 9, dans lequel la composition contient entre 0,05 et 0,15% en poids de plastifiant.

11. Procédé suivant la revendication 10, dans lequel la pouzzolane est un métakaolin.

12. Procédé suivant l'une quelconque des revendications 1 à 11, dans lequel le plastifiant est choisi dans le groupe qui inclut l'acide polyacrylique, des poly-carboxylates et des sels, des copolymères et des dérivés de ceux-ci, dans lequel les dérivés incluent des polyacrylamides et d'autres précurseurs, des résines de naphtalène sulfonées, des lignosulfonates, des plastifiants de type « peigne », à base de cellulose, des polymères à base de polyvinylalcool, des produits de condensation de mélamine-formaldéhyde sulfonés, des produits de condensation de naphtalène-formaldéhyde sulfonés et des lignosulfonates modifiés.

13. Procédé suivant la revendication 12, dans lequel le plastifiant est un plastifiant de type « peigne », comprenant un squelette possédant des fractions chargées et/ou non chargées et des chaînes latérales de polyalkylène.

14. Procédé suivant l'une quelconque des revendications 1 à 13, dans lequel le plastifiant est un superplastifiant.

15. Composition à base de ciment durcissable obtenue par le procédé suivant l'une quelconque des revendications précédentes.
